# DEMANDE DE BREVET EUROPEEN

(11) **EP 1 288 509 A1**
(43) Date de publication de la demande: **05.03.2003**
(21) Numéro de dépôt: 02292161.3
(22) Date de dépôt: 02.09.2002
(51) Int. Cl.: F16B 21/07, F16B 21/20

(54) **Pince à double blocage sur un axe**

(30) Priorité: 31.08.2001 FR 0111338
(71) Demandeur: Oeno Concept, 51530 Mardeuil (FR)
(72) Inventeur: Chinchon, Jean-Marc, 51530 Mardeuil (FR)
(74) Mandataire: Berger, Helmut

(57) **Abrégé**

Selon l'invention, la pince comprend deux branches planes (5) montées pivotantes à l'intérieur d'un guide (1), leur éloignement étant limité par deux butées de translation (3) et leur rapprochement par une butée de centrage (4), le guide (1) étant glissé sur un axe (A) et les branches présentant chacune une ouverture entourant ledit axe. Applications: systèmes mécaniques à indexation utilisables dans l'industrie, l'agriculture etc.

## Description

La présente invention a pour objet une pince à double blocage sur un arbre ou axe par arc-boutement.

Il est connu d'utiliser le frottement pour bloquer un objet sur un arbre, axe ou une tige de manière à ce que les forces de frottement s'opposant au déplacement soient supérieures à la force tendant au déplacement de l'objet.

Dans les dispositifs fonctionnant selon ce principe, le blocage est toujours réalisé dans une seule direction.

Un premier objet de l'invention est de pallier cet inconvénient et de réaliser un blocage ou indexage en translation dans deux directions opposées d'un guide coulissant par rapport à l'axe ou d'un axe coulissant à l'intérieur du guide.

Selon l'invention, la pince à double blocage est caractérisée en ce qu'elle comprend deux branches planes montées pivotantes à l'intérieur d'un guide, leur éloignement étant limité par deux butées de translation et leur rapprochement par une butée de centrage, le guide étant glissé sur un axe et les branches présentant chacune une ouverture entourant ledit axe.

Selon une autre caractéristique de l'invention, les bords latéraux desdites ouvertures sont inclinés par rapport au plan des branches.

Ainsi, c'est la position des branches et par suite des bords des ouvertures qui va provoquer ou non le serrage désiré.

L'axe peut être de section circulaire, prismatique ou circulaire avec des pans coupés. Ainsi, en fonction de la section de l'axe, la rotation du guide par rapport à cet axe peut être libre, limitée à un angle (par exemple 45°) ou complètement interdite.

Selon une autre caractéristique de l'invention, le guide de translation comporte deux butées de translation (une pour chaque branche) et une butée de centrage.

Les butées de translation et de centrage peuvent être situées à l'intérieur ou à l'extérieur du guide de translation. Elles peuvent êtres liés ou indépendants l'une de l'autre. Ainsi, il est possible d'autoriser une translation dans un sens et l'interdire dans l'autre.

La butée de centrage peut être remplacée par un système mécanique extérieur permettant de fermer l'angle des branches symétriquement autour d'un axe fictif.

Les ouvertures prévues dans les deux branches permettent la translation libre lorsque l'inclinaison n'engendre pas de point de pincement. Elles permettent aussi après inclinaison des branches le pincement de l'axe cylindrique.

Un ressort est disposé de préférence entre les deux branches pour rappeler automatiquement les branches en position ouverte de verrouillage. Un verrou autorise le maintien de la pince position de fermeture coulissante.

D'autres caractéristiques et avantages de l'invention apparaîtront au cours de la description qui va suivre d'un mode particulier de réalisation, donné uniquement à titre d'exemple non limitatif, en regard des dessins qui représentent :
- La figure 1, une coupe verticale d'une pince selon l'invention en position ouverte de blocage;
- La figure 2, à échelle agrandie la configuration de la pince lors du blocage;
- La figure 3, la pince de la figure 1 en position de fermeture, dans les mêmes conditions de représentation;
- la figure 4, à échelle agrandie, la position de la pince en position libre;
- la figure 5,une vue en coupe horizontale selon la ligne V-V de la figure 3.

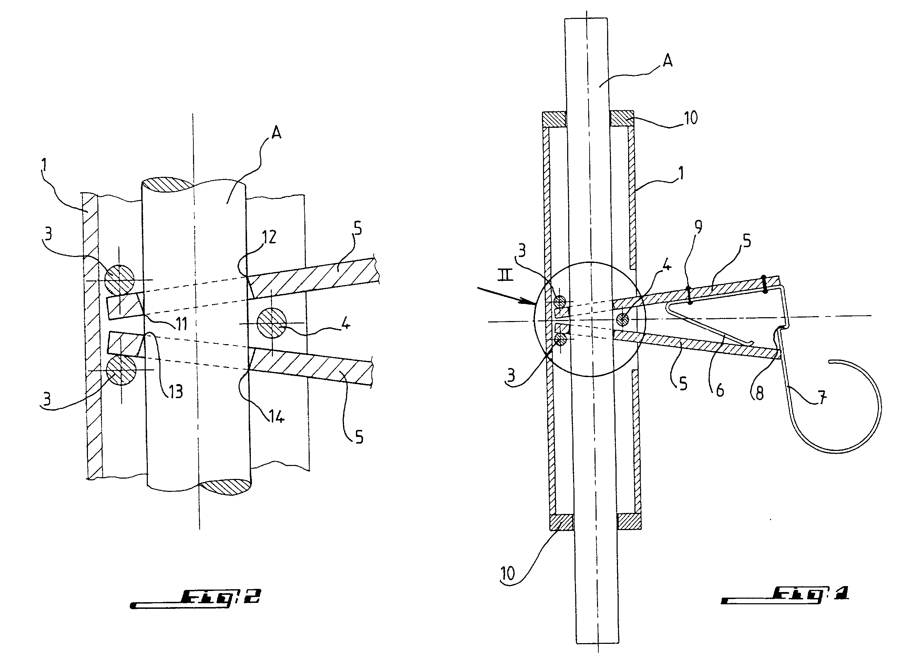

Sur l'ensemble des figures, les mêmes références désignent les mêmes éléments. Sur la figure 1, on voit que la pince est montée sur un arbre ou axe A. Elle se compose d'un guide 1 entourant l'arbre A sur lequel il peut coulisser librement par deux paliers 10 en l'absence du serrage de la pince.

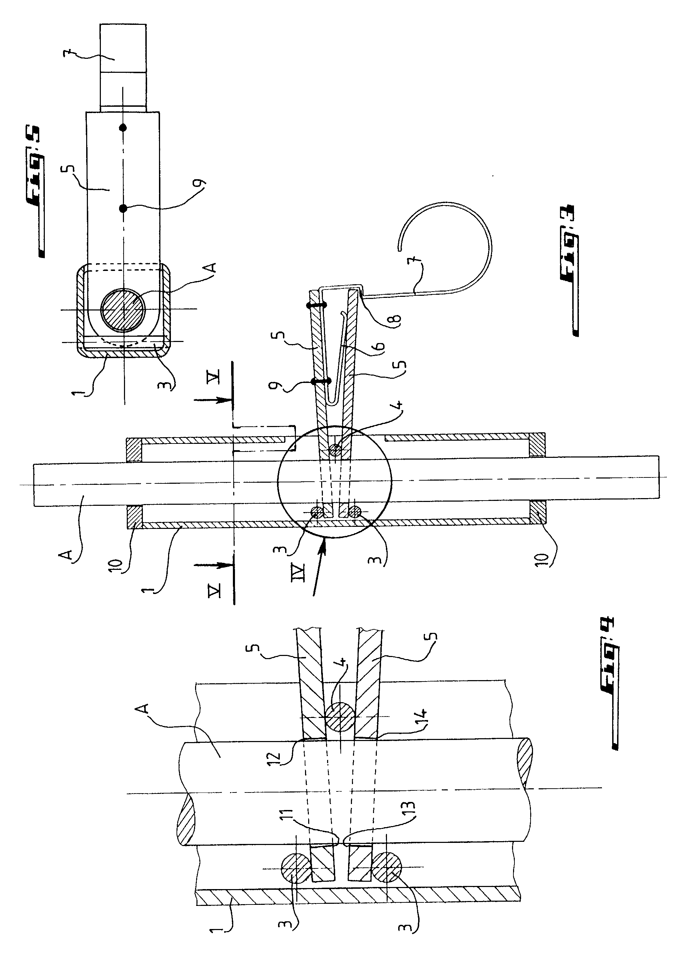

À l'intérieur du guide ou manchon 1 qui est relié à une pièce (non représentée) dont la hauteur doit être réglée sur l'arbre, se trouvent deux butées de centrage 3 traversant le manchon et fixes dans celui-ci. Une troisième butée 4 dite de centrage occupe une position médiane par rapport aux deux butées de translation. La pince elle-même est constituée de deux branches 5 dont les faces externes prennent appui sur les butées de translation 3 et, dont les faces internes s'appuient sur la butée de centrage lorsque la pince est fermée, comme représenté sur la figure 3.

Les branches 5 sont rappelées en position ouverte par un ressort 6 qui, dans l'exemple représenté est un ressort en épingle à cheveux maintenu contre la face interne de la branche supérieure (sur la figure), par exemple par des rivets 9.Le ressort 6 se prolonge par un verrou 7 présentant une commande en forme d'anneau permettant de fermer la pince dans la position représentée sur la figure 3 en emprisonnant le bord de la branche inférieure 5 au moyen d'un décrochement 8.

Le principe du double blocage sera maintenant décrit en regard de la figure 2. En position de blocage, les branches 5, sous l'action du ressort 6, sont éloignées l'une de l'autre en restant en appui sur les butées 3 et forment, entre elles, un angle de l'ordre de 20°. Les bords 11 et 12 de l'ouverture prévue dans la branche supérieure 5 viennent en contact avec la surface externe de l'arbre 4 et immobilisent, dans les deux directions, les butées 3 et, par suite le manchon 1 par rapport à l'arbre A. Il en va de même des contacts qui se produisent, sur la branche inférieure (sur le dessin) sur les bords 13 et 14. On obtient ainsi le double blocage désiré.

Lorsque l'on désire déplacer le manchon le long de l'arbre A, il suffit de rapprocher les deux branches 5 de la pince à l'encontre du ressort 6. L'angle formé entre celles-ci devient alors plus petit de sorte que les zones de contact 11 à 14 soient éloignées de l'arbre A et que le coulissement le long de celui-ci soit libre, les forces de frottement étant réduites pour constituer un simple guidage. Comme cela apparaît sur la figure 4, les branches 5 sont alors suspendues entre les butées 3 et la butée de centrage 4. Le contact entre les bords de coincement 11 à 14 et l'arbre A peuvent ne plus être en contact avec l'arbre A dans la position de fermeture de la pince représentée sur la figure 3. Lors du rapprochement des branches 5, le bord de la branche inférieure s'encliquète automatiquement dans le décrochement 8 du verrou 7.

Il va de soi que de nombreuses variantes peuvent être apportées, notamment par substitution de moyens techniques équivalents, sans sortir pour cela du cadre de l'invention.

## Revendications

1. Pince à double blocage **caractérisée en ce qu'**elle comprend deux branches planes (5) montées pivotantes à l'intérieur d'un guide (1), leur éloignement étant limité par deux butées de translation (3) et leur rapprochement par une butée de centrage (4), le guide (1) étant glissé sur un axe (A) et les branches présentant chacune une ouverture entourant ledit dit axe avec lequel elles viennent, en position de blocage, en contact par leurs bords.

2. Pince selon la revendication 1, **caractérisée en ce que** les bords latéraux (11,12,13,14) desdites ouvertures sont inclinés par rapport au plan des branches.

3. Pince selon la revendication 1, **caractérisée en ce qu'**un ressort (6) est disposé entre les deux branches (5) pour rappeler automatiquement les branches en position ouverte de verrouillage.

4. Pince selon la revendication 1, **caractérisée en ce qu'**un verrou (7) maintient de la pince en position de fermeture coulissante.
